# EUROPÄISCHE PATENTANMELDUNG

(11) **EP 4 610 834 A1**
(43) Veröffentlichungstag der Anmeldung: **03.09.2025**
(21) Anmeldenummer: 24160816.5
(22) Anmeldetag: 01.03.2024
(51) Int. Cl.: G06F 11/36

(54) **COMPUTERIMPLEMENTIERTES VERFAHREN UND SYSTEM ZUM BESTIMMEN VON ODD-RELEVANTEN SZENARIEN IN EINEM DATENSATZ**

(71) Anmelder: dSPACE GmbH, 33102 Paderborn (DE)
(72) Erfinder: Hemion, Nikolas, 33102 Paderborn (DE); Grotenhöfer, Steffen, 33102 Paderborn (DE); Elzeiny, Omar, 33102 Paderborn (EG)

(57) **Zusammenfassung**

Die Erfindung betrifft ein computerimplementiertes Verfahren zum Bestimmen von durch einen Datensatz von Umfelddaten eines Kraftfahrzeugs umfassten, eine Operational Design Domain (10) einer automatisierten Fahrfunktion des Kraftfahrzeugs abdeckenden Szenarien. Die Erfindung betrifft des Weiteren ein computerimplementiertes Verfahren zum Durchführen eines virtuellen Tests zum Validieren einer automatisierten Fahrfunktion eines Kraftfahrzeugs. Die Erfindung betrifft ferner ein System (1) zum Bestimmen von durch einen Datensatz von Umfelddaten eines Kraftfahrzeugs umfassten, eine Operational Design Domain (10) einer automatisierten Fahrfunktion des Kraftfahrzeugs abdeckenden Szenarien.

## Beschreibung

Die vorliegende Erfindung betrifft ein computerimplementiertes Verfahren zum Bestimmen von durch einen Datensatz von Umfelddaten eines Kraftfahrzeugs umfassten, eine Operational Design Domain einer automatisierten Fahrfunktion des Kraftfahrzeugs abdeckenden Szenarien.

Die vorliegende Erfindung betrifft ferner ein computerimplementiertes Verfahren zum Durchführen eines virtuellen Tests zum Validieren einer automatisierten Fahrfunktion eines Kraftfahrzeugs.

Des Weiteren betrifft die vorliegende Erfindung ein System zum Bestimmen von durch einen Datensatz von Umfelddaten eines Kraftfahrzeugs umfassten, eine Operational Design Domain einer automatisierten Fahrfunktion des Kraftfahrzeugs abdeckenden Szenarien.

### Stand der Technik

Fahrassistenzsysteme wie z.B. ein adaptiver Geschwindigkeitsregler und/oder Funktionen für das hochautomatisierte Fahren können mithilfe diverser Überprüfungsmethoden verifiziert bzw. validiert werden. Dabei können insbesondere Simulationen verwendet werden.

Zur Erstellung von Testszenarien für Simulationen ist die Durchführung von Testfahrten erforderlich. Die hierdurch gewonnenen Sensordaten werden sodann in ein Test-Szenario abstrahiert.

Eingangsdaten sind dabei Rohdaten, also Sensordaten aus realen Messfahrten im Sinne von Aufzeichnungen von Radarechos, 3D-Punktewolken aus Lidarmessungen und Bilddaten. Ergebnisdaten sind simulierbare Fahrszenarien, die einerseits eine Umgebung und andererseits auch Trajektorien umfassen.

Andererseits können Test-Szenarien beispielsweise ohne eine vorherige Durchführung von Testfahrten synthetisch erzeugt oder aus Testfahrten gewonnene Szenarien zur Generierung neuer Testfälle augmentiert bzw. modifiziert werden.

"Szenario-Optimierung für die Absicherung von automatisierten und autonomen Fahrsystemen" (Florian Hauer, B. Holzmüller, 2019) offenbart Verfahren zur Verifikation und Validierung automatisierter und autonomer Fahrsysteme, insbesondere das Finden geeigneter Testszenarien für die virtuelle Absicherung.

Die Testmethodik sieht dabei die Adaption einer metaheuristischen Suche vor, um Szenarien zu optimieren. Hierfür muss ein passender Suchraum und eine geeignete Gütefunktion aufgestellt werden. Ausgehend von einer abstrakten Beschreibung der Funktionalität und Anwendungsfälle des Systems werden parametrisierte Szenarien abgeleitet.

Zum Nachweis einer hinreichenden Validierung hochautomatisierter Fahrfunktionen sind aus Zertifizierungssicht jedoch aus Sensordaten realer Testfahrten generierte Testszenarien gegenüber synthetisch erzeugten Testszenarien zu bevorzugen, da reale Testfahrten oftmals in der Lage sind, eine Komplexität sämtlicher ein Testszenario beeinflussenden Variablen besser abzubilden.

Die Fähigkeiten des automatisierten Fahrsystems werden dabei durch die Definition ihres Einsatzbereichs (Operational Design Domain, ODD) festgelegt. Die Operational Design Domain stellt die Betriebsumgebung dar, in der ein automatisiertes Fahrsystem eine dynamische Fahraufgabe sicher durchführen kann.

Andererseits bietet die synthetische Generierung von Szenarien den Vorteil, dass hierdurch ggf. Testszenarien erzeugbar sind, die ein menschlicher Domänen-Experte möglicherweise nicht berücksichtigen würde, welche jedoch sicherheitskritisch sein können.

Demzufolge besteht ein Bedarf, bestehende Verfahren zum Erzeugen von eine automatisierte Fahrfunktion eines Kraftfahrzeugs validierenden Test-Szenarien dahingehend zu verbessern, dass diese eine Grundlage für eine zuverlässige Zertifizierung einer Abdeckung der Operational Design Domain der Fahrfunktion ermöglichen.

Es ist daher Aufgabe der Erfindung, ein verbessertes Verfahren zum Bestimmen einer Testdaten-basierten Abdeckung der Operational Design Domain der automatisierten Fahrfunktion bereitzustellen.

### Offenbarung der Erfindung

Die Aufgabe wird erfindungsgemäß durch ein computerimplementiertes Verfahren zum Bestimmen von durch einen Datensatz von Umfelddaten eines Kraftfahrzeugs umfassten, eine Operational Design Domain einer automatisierten Fahrfunktion des Kraftfahrzeugs abdeckenden Szenarien mit den Merkmalen des Patentanspruchs 1 gelöst.

Des Weiteren wird die Aufgabe erfindungsgemäß durch ein computerimplementiertes Verfahren zum Durchführen eines virtuellen Tests zum Validieren einer automatisierten Fahrfunktion eines Kraftfahrzeugs mit den Merkmalen des Patentanspruchs 12 gelöst.

Die Aufgabe wird erfindungsgemäß ferner durch ein System zum Bestimmen von durch einen Datensatz von Umfelddaten eines Kraftfahrzeugs umfassten, eine Operational Design Domain einer automatisierten Fahrfunktion des Kraftfahrzeugs abdeckenden Szenarien mit den Merkmalen des Patentanspruchs 13 gelöst.

Darüber hinaus wird die Aufgabe durch ein Computerprogrammprodukt mit einem Computerprogramm, das Softwaremittel zur Durchführung eines der erfindungsgemäßen Verfahren umfasst, wobei das Computerprogramm auf einem Computer ausgeführt wird, mit den Merkmalen des Patentanspruchs 14 gelöst.

Überdies wird die Aufgabe durch einen computerlesbaren Datenträger mit Programmcode eines Computerprogramms, um zumindest Teile eines der erfindungsgemäßen Verfahren auszuführen, wenn das Computerprogramm auf einem Computer ausgeführt wird, mit den Merkmalen des Patentanspruchs 15 gelöst.

Die Erfindung betrifft ein computerimplementiertes Verfahren zum Bestimmen von durch einen Datensatz von Umfelddaten eines Kraftfahrzeugs umfassten, eine Operational Design Domain einer automatisierten Fahrfunktion des Kraftfahrzeugs abdeckenden Szenarien.

Das Verfahren umfasst ein Bereitstellen eines ersten Datensatzes von die Operational Design Domain der automatisierten Fahrfunktion des Kraftfahrzeugs abdeckenden, insbesondere synthetisch erzeugten, konkreten Szenarien.

Des Weiteren umfasst das Verfahren für jedes konkrete Szenario des ersten Datensatzes, Bestimmen von Positionen und/oder Abschnitten in geographischen Kartendaten, welche vorgegebene Anforderungen, insbesondere Parameter, des konkreten Szenarios erfüllen.

Das Verfahren umfasst ferner ein Bereitstellen eines zweiten Datensatzes von Sensordaten einer durch eine Mehrzahl fahrzeugseitiger Umfelderkennungsensoren erfassten Fahrt des Kraftfahrzeugs und ein Filtern des zweiten Datensatzes unter Verwendung der in den geographischen Kartendaten bestimmten Positionen und/oder Abschnitten.

Des Weiteren umfasst das Verfahren ein Erstellen einer Objektliste von durch den zweiten Datensatz umfassten Objekten an den gefilterten Positionen und/oder Abschnitten der geographischen Kartendaten.

Das Verfahren umfasst überdies ein Vergleichen erster Trajektoriendaten für jedes durch den ersten Datensatz umfasste konkrete Szenario und zweiter Trajektoriendaten von durch die Objektliste umfassten Trajektoriendaten, und basierend auf dem Vergleich, ein Bestimmen von durch den zweiten Datensatz umfassten, die Operational Design Domain der automatisierten Fahrfunktion des Kraftfahrzeugs abdeckenden Szenarien.

Die Erfindung betrifft ferner ein computerimplementiertes Verfahren zum Durchführen eines virtuellen Tests zum Validieren einer automatisierten Fahrfunktion eines Kraftfahrzeugs unter Verwendung der durch das erfindungsgemäße Verfahren bestimmten, die Operational Design Domain der automatisierten Fahrfunktion des Kraftfahrzeugs abdeckenden Szenarien.

Die Erfindung betrifft überdies ein System zum Bestimmen von durch einen Datensatz von Umfelddaten eines Kraftfahrzeugs umfassten, eine Operational Design Domain einer automatisierten Fahrfunktion des Kraftfahrzeugs abdeckenden Szenarien.

Das System umfasst eine erste Datenbereitstellungseinheit, welche konfiguriert ist, einen ersten Datensatz von die Operational Design Domain der automatisierten Fahrfunktion des Kraftfahrzeugs abdeckenden, insbesondere synthetisch erzeugten, konkreten Szenarien bereitzustellen.

Darüber hinaus umfasst das System eine erste Berechnungseinheit, welche konfiguriert ist, für jedes konkrete Szenario des ersten Datensatzes, Positionen und/oder Abschnitte in geographischen Kartendaten zu bestimmen, welche vorgegebene Anforderungen, insbesondere Parameter, des konkreten Szenarios erfüllen.

Das System umfasst ferner eine zweite Datenbereitstellungseinheit, welche konfiguriert ist, einen zweiten Datensatz von Sensordaten einer durch eine Mehrzahl fahrzeugseitiger Umfelderkennungsensoren erfassten Fahrt des Kraftfahrzeugs bereitzustellen sowie eine zweite Berechnungseinheit, welche konfiguriert ist, den zweiten Datensatz unter Verwendung der in den geographischen Kartendaten bestimmten Positionen und/oder Abschnitten zu filtern.

Überdies umfasst das System eine dritte Berechnungseinheit, welche konfiguriert ist, eine Objektliste von durch den zweiten Datensatz umfassten Objekten an den gefilterten Positionen und/oder Abschnitten der geographischen Kartendaten zu erstellen, eine vierte Berechnungseinheit, welche konfiguriert ist, erste Trajektoriendaten für jedes durch den ersten Datensatz umfasste konkrete Szenarios und zweite Trajektoriendaten von durch die Objektliste umfassten Trajektoriendaten zu vergleichen, und eine fünfte Berechnungseinheit, welche konfiguriert ist, durch den zweiten Datensatz umfasste, die Operational Design Domain der automatisierten Fahrfunktion des Kraftfahrzeugs abdeckenden Szenarien zu bestimmen.

Die Erfindung betrifft des Weiteren ein Computerprogrammprodukt mit einem Computerprogramm, das Softwaremittel zur Durchführung eines der erfindungsgemäßen Verfahren umfasst, wobei das Computerprogramm auf einem Computer ausgeführt wird sowie einen computerlesbaren Datenträger mit Programmcode eines Computerprogramms, um zumindest Teile eines der erfindungsgemäßen Verfahren auszuführen, wenn das Computerprogramm auf einem Computer ausgeführt wird.

Eine Idee der vorliegenden Erfindung ist es, durch den Vergleich von Trajektorien-Datenpaaren des ersten Datensatzes von die Operational Design Domain der automatisierten Fahrfunktion des Kraftfahrzeugs abdeckenden, insbesondere synthetisch erzeugten, konkreten Szenarien und des zweiten Datensatzes von Sensordaten der durch die Mehrzahl fahrzeugseitiger Umfelderkennungsensoren erfassten Fahrt des Kraftfahrzeugs eine Abdeckung der Operational Design Domain der automatisierten Fahrfunktion durch die durch den zweiten Datensatz umfassten Test-Szenarien zu ermöglichen.

Dadurch ist es in vorteilhafter Weise nicht notwendig, szenariospezifische Detektionslogiken zu implementieren, um die Abdeckung der Operational Design Domain der automatisierten Fahrfunktion durch die durch den zweiten Datensatz umfassten Test-Szenarien zu bestimmen.

Ebenso wenig sind für den Schritt des Vergleichens des ersten Datensatzes und des zweiten Datensatzes Kartendaten erforderlich, da bereits vorab für den ersten Datensatz Positionen und/oder Abschnitte relevanter Test-Szenarien in geographischen Kartendaten bestimmt wurden.

Somit ist es möglich, den Vergleich des ersten Datensatzes und des zweiten Datensatzes zur Bestimmung von Test-Szenarien des zweiten Datensatzes, welche die Operational Design Domain der automatisierten Fahrfunktion abdecken, unter Verwendung von lediglich Trajektorien-Datenpaaren des ersten und zweiten Datensatzes durchzuführen. Dies trägt ebenfalls zu einer effizienten Bestimmung der Szenarien-Abdeckung in den durch den zweiten Datensatz bereitgestellten Realdaten bei.

Das vorgeschlagene Verfahren schränkt daher die Suche nach Realdaten stark ein und stellt somit sicher, dass Trajektoriendaten direkt miteinander verglichen werden können, ohne eine zugrundeliegende geographische Information berücksichtigen zu müssen. Dadurch wird die Szenariendetektion drastisch vereinfacht. Da weniger Realdaten durch aufwändige Perzeptionsalgorithmen prozessiert werden müssen, werden die Verarbeitungskosten (typischerweise Cloud-Computing) ferner um ein Vielfaches reduziert.

Gemäß einer bevorzugten Weiterbildung der Erfindung ist vorgesehen, dass ein die Operational Design Domain der automatisierten Fahrfunktion des Kraftfahrzeugs abdeckendes Szenario bestimmt wird, falls die durch den ersten Datensatz umfassten ersten Trajektoriendaten zumindest ein vorgegebenes Ähnlichkeitsmaß zu den, durch die Objektliste umfassten zweiten Trajektoriendaten aufweisen.

Hierdurch müssen sich die durch den ersten Datensatz und den zweiten Datensatz umfassten Szenarien nicht vollständig decken. Die Anwendung des Kriteriums der Anforderung eines vorgegebenes Ähnlichkeitsmaßes ermöglicht somit eine gewisse Flexibilität in der Bestimmung relevanter, die Operational Design Domain der automatisierten Fahrfunktion des Kraftfahrzeugs erfüllender, durch den zweiten Datensatz umfasster Test-Szenarien.

Gemäß einer weiteren bevorzugten Weiterbildung der Erfindung ist vorgesehen, dass die ersten Trajektoriendaten in einen ersten Merkmalsvektor transformiert werden und die zweiten Trajektoriendaten in einen zweiten Merkmalsvektor transformiert werden, wobei ein erster Algorithmus des maschinellen Lernens auf ein Trajektoriendatenpaar umfassend den ersten Merkmalsvektor eines jeweiligen durch den ersten Datensatz umfassten konkreten Szenarios und den zweiten Merkmalsvektor von durch die Objektliste umfassten Trajektoriendaten angewendet wird.

Durch die Repräsentation der Trajektoriendaten in einem Merkmalsraum kann eine objektive Vergleichsbasis für diese geschaffen werden.

Gemäß einer weiteren bevorzugten Weiterbildung der Erfindung ist vorgesehen, dass der erste Algorithmus des maschinellen Lernens basierend auf einem Vektorabstand zwischen dem ersten Merkmalsvektor und dem zweiten Merkmalsvektor bestimmt, insbesondere klassifiziert, ob die durch den zweiten Datensatz umfassten zweiten Trajektoriendaten die Operational Design Domain der automatisierten Fahrfunktion des Kraftfahrzeugs abdecken.

Eine Klassifikation weist hierbei den Vorteil auf einer definitiven Aussage bzw. Bestimmung auf, ob die durch den zweiten Datensatz umfassten zweiten Trajektoriendaten die Operational Design Domain der automatisierten Fahrfunktion des Kraftfahrzeugs abdecken.

Gemäß einer weiteren bevorzugten Weiterbildung der Erfindung ist vorgesehen, dass das Filtern des zweiten Datensatzes unter Verwendung der in den geographischen Kartendaten bestimmten Positionen und/oder Abschnitten ein Bestimmen von durch den zweiten Datensatz umfassten geographischen Positionen und/oder Abschnitten umfasst, welche die vorgegebenen Anforderungen, insbesondere die vorgegebenen Parameter, des jeweiligen konkreten Szenarios erfüllen.

Somit kann in vorteilhafter Weise festgestellt werden, ob die in den geographischen Kartendaten bestimmten Positionen und/oder Abschnitte ebenfalls in dem zweiten Datensatz vorhanden sind, die zusätzlich die vorgegebenen Parameter des jeweiligen konkreten Szenarios erfüllen.

Gemäß einer weiteren bevorzugten Weiterbildung der Erfindung ist vorgesehen, dass die vorgegebenen Anforderungen, insbesondere die vorgegebenen Parameter, des konkreten Szenarios eine Anzahl von Fahrspuren, eine Fahrspurbreite und/oder eine Fahrbahnkrümmung umfassen.

Die vorgegebenen Parameter des jeweiligen konkreten Szenarios ermöglichen somit den Vergleich mit den Realdaten des zweiten Datensatzes, um zu identifizieren, ob die konkreten Szenarien des ersten Datensatzes zumindest abschnittsweise durch den zweiten Datensatz abgedeckt sind.

Gemäß einer weiteren bevorzugten Weiterbildung der Erfindung ist vorgesehen, dass das Filtern des zweiten Datensatzes unter Verwendung der in den geographischen Kartendaten bestimmten Positionen und/oder Abschnitten mittels einer vorgegebenen Ähnlichkeitsmetrik durchgeführt wird.

Hierdurch müssen sich die geographischen Kartendaten und die durch den zweiten Datensatz umfassten Szenarien nicht vollständig decken. Die Anwendung der vorgegebenen Ähnlichkeitsmetrik ermöglicht somit Flexibilität in der Bestimmung relevanter, die Operational Design Domain der automatisierten Fahrfunktion des Kraftfahrzeugs erfüllender, durch den zweiten Datensatz umfasster Test-Szenarien.

Gemäß einer weiteren bevorzugten Weiterbildung der Erfindung ist vorgesehen, dass der zweite Datensatz unter Verwendung der in den geographischen Kartendaten bestimmten Positionen und/oder Abschnitten nach Sequenzen durchsucht wird, an welchen das Kraftfahrzeug, insbesondere ein Ego-Fahrzeug, auf die vorgegebene Ähnlichkeitsmetrik erfüllenden Straßenabschnitten fuhr.

Hierdurch können in vorteilhafter Weise Sequenzen aus dem zweiten Datensatz herangezogen werden, die zu einem gewissen Grad mit den in den geographischen Kartendaten bestimmten Positionen und/oder Abschnitten übereinstimmen.

Gemäß einer weiteren bevorzugten Weiterbildung der Erfindung ist vorgesehen, dass für jede die vorgegebene Ähnlichkeitsmetrik erfüllende Sequenz die Objektliste erstellt wird.

Die Objektlisten sind eine automatisch erkannte Umgebung des Kraftfahrzeugs, welche für jeden Zeitschritt strukturiert abgelegt ist.

Basierend auf der Objektliste kann sodann rekonstruiert werden, was um das Ego-Fahrzeug herum passiert ist. Dies kann in eine dreidimensionale Umgebung übersetzt werden. Die detektierten Objekte können dabei auf Straßennetzdaten projiziert werden.

Gemäß einer weiteren bevorzugten Weiterbildung der Erfindung ist vorgesehen, dass das Erstellen der Objektliste unter Verwendung eines zweiten Algorithmus des maschinellen Lernens durchführt wird, welcher konfiguriert ist, die durch den zweiten Datensatz umfassten Objekte an den gefilterten Positionen und/oder Abschnitten der geographischen Kartendaten durch Objektdetektion zu bestimmen. Somit können die Objektlisten basierend auf dem zweiten Datensatz automatisiert erstellt werden.

Gemäß einer weiteren bevorzugten Weiterbildung der Erfindung ist vorgesehen, dass Objektlistendaten der jeweiligen Objektliste in einem Koordinatensystem des die Mehrzahl fahrzeugseitiger Umfelderkennungsensoren aufweisenden Kraftfahrzeugs liegen. Somit kann eine Trajektorie des Ego-Fahrzeugs in dem Koordinatensystem mit oder ohne Karten- bzw. Straßennetzdaten erzeugt bzw. rekonstruiert werden.

Die hierin beschriebenen Merkmale des computerimplementierten Verfahrens zum Bestimmen von durch einen Datensatz von Umfelddaten eines Kraftfahrzeugs umfassten, eine Operational Design Domain einer automatisierten Fahrfunktion des Kraftfahrzeugs abdeckenden Szenarien sind ebenso auf das erfindungsgemäße System zum Bestimmen von durch einen Datensatz von Umfelddaten eines Kraftfahrzeugs umfassten, eine Operational Design Domain einer automatisierten Fahrfunktion des Kraftfahrzeugs abdeckenden Szenarien und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:

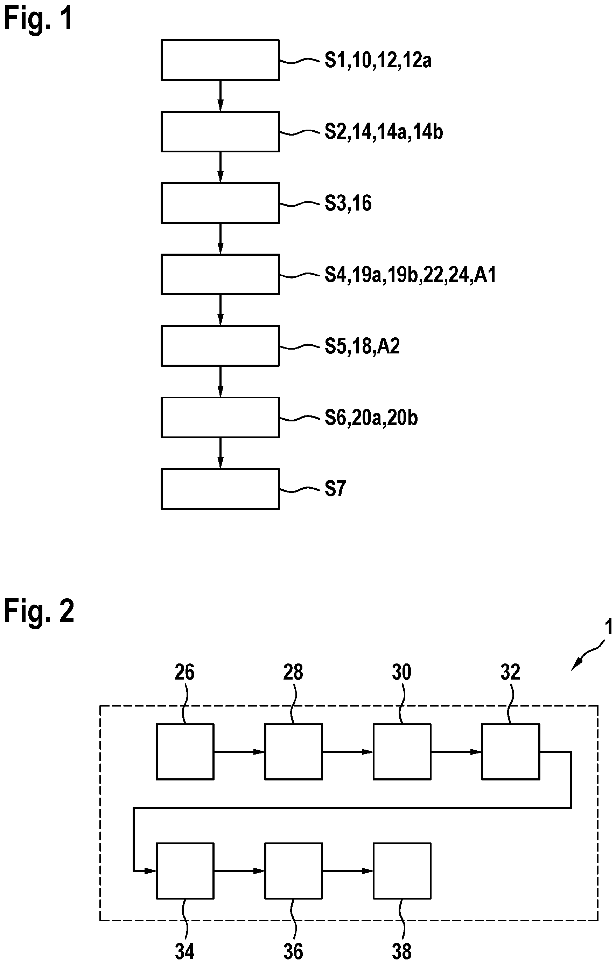

- Fig. 1: ein Ablaufdiagramm eines computerimplementierten Verfahrens zum Bestimmen von durch einen Datensatz von Umfelddaten eines Kraftfahrzeugs umfassten, eine Operational Design Domain einer automatisierten Fahrfunktion des Kraftfahrzeugs abdeckenden Szenarien gemäß einer bevorzugten Ausführungsform der Erfindung; und
- Fig.2: eine schematische Darstellung eines Systems zum Bestimmen von durch einen Datensatz von Umfelddaten eines Kraftfahrzeugs umfassten, eine Operational Design Domain einer automatisierten Fahrfunktion des Kraftfahrzeugs abdeckenden Szenarien gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

Das in Fig. 1 gezeigte computerimplementierte Verfahren zum Bestimmen von durch einen Datensatz von Umfelddaten eines Kraftfahrzeugs umfassten, eine Operational Design Domain 10 einer automatisierten Fahrfunktion des Kraftfahrzeugs abdeckenden Szenarien umfasst ein Bereitstellen S1 eines ersten Datensatzes 12 von die Operational Design Domain 10 der automatisierten Fahrfunktion des Kraftfahrzeugs abdeckenden, insbesondere synthetisch erzeugten, konkreten Szenarien 12a.

Das Verfahren umfasst ferner für jedes konkrete Szenario 12a des ersten Datensatzes 12, Bestimmen S2 von Positionen 14a und/oder Abschnitten 14b in geographischen Kartendaten 14, welche vorgegebene Anforderungen, insbesondere Parameter, des konkreten Szenarios 12a erfüllen sowie Bereitstellen S3 eines zweiten Datensatzes 16 von Sensordaten einer durch eine Mehrzahl fahrzeugseitiger Umfelderkennungsensoren erfassten Fahrt des Kraftfahrzeugs.

Darüber hinaus umfasst das Verfahren ein Filtern S4 des zweiten Datensatzes 16 unter Verwendung der in den geographischen Kartendaten 14 bestimmten Positionen 14a und/oder Abschnitten 14b sowie ein Erstellen S5 einer Objektliste 18 von durch den zweiten Datensatz 16 umfassten Objekten an den gefilterten Positionen 14a und/oder Abschnitten 14b der geographischen Kartendaten 14.

Das Verfahren umfasst überdies ein Vergleichen S6 erster Trajektoriendaten 20a für jedes durch den ersten Datensatz 12a umfasste konkrete Szenario 12a und zweiter Trajektoriendaten 20b von durch die Objektliste 18 umfassten Trajektoriendaten und ein Bestimmen S7 von durch den zweiten Datensatz 16 umfassten, die Operational Design Domain 10 der automatisierten Fahrfunktion des Kraftfahrzeugs abdeckenden Szenarien.

Des Weiteren wird ein die Operational Design Domain 10 der automatisierten Fahrfunktion des Kraftfahrzeugs abdeckendes Szenario bestimmt, falls die durch den ersten Datensatz 12a umfassten ersten Trajektoriendaten 20a zumindest ein vorgegebenes Ähnlichkeitsmaß zu den, durch die Objektliste 18 umfassten zweiten Trajektoriendaten 20b aufweisen.

Die ersten Trajektoriendaten 20a werden in einen ersten Merkmalsvektor 19a transformiert und die zweiten Trajektoriendaten 20b werden in einen zweiten Merkmalsvektor 19b transformiert. Ein erster Algorithmus des maschinellen Lernens A1 wird dabei auf ein Trajektoriendatenpaar umfassend den ersten Merkmalsvektor 19a eines jeweiligen durch den ersten Datensatz 12a umfassten konkreten Szenarios 12a und den zweiten Merkmalsvektor 19b von durch die Objektliste 18 umfassten Trajektoriendaten angewendet.

Der erste Algorithmus des maschinellen Lernens A1 bestimmt, insbesondere klassifiziert ferner basierend auf einem Vektorabstand zwischen dem ersten Merkmalsvektor 19a und dem zweiten Merkmalsvektor 19b, ob die durch den zweiten Datensatz 16 umfassten zweiten Trajektoriendaten 20b die Operational Design Domain 10 der automatisierten Fahrfunktion des Kraftfahrzeugs abdecken.

Das Filtern S4 des zweiten Datensatzes 16 unter Verwendung der in den geographischen Kartendaten 14 bestimmten Positionen 14a und/oder Abschnitten 14b umfasst dabei ein Bestimmen von durch den zweiten Datensatz 16 umfassten geographischen Positionen 14a und/oder Abschnitten 14b, welche die vorgegebenen Anforderungen, insbesondere die vorgegebenen Parameter, des jeweiligen konkreten Szenarios 12a erfüllen.

Die vorgegebenen Anforderungen, insbesondere die vorgegebenen Parameter, des konkreten Szenarios 12a umfassen eine Anzahl von Fahrspuren, eine Fahrspurbreite und/oder eine Fahrbahnkrümmung.

Das Filtern S4 des zweiten Datensatzes 16 wird unter Verwendung der in den geographischen Kartendaten 14 bestimmten Positionen 14a und/oder Abschnitten 14b mittels einer vorgegebenen Ähnlichkeitsmetrik 24 durchgeführt.

Der zweite Datensatz 16 wird des Weiteren unter Verwendung der in den geographischen Kartendaten 14 bestimmten Positionen 14a und/oder Abschnitten 14b nach Sequenzen 22 durchsucht, an welchen das Kraftfahrzeug, insbesondere ein Ego-Fahrzeug, auf die vorgegebene Ähnlichkeitsmetrik 24 erfüllenden Straßenabschnitten 14b fuhr, wobei für jede die vorgegebene Ähnlichkeitsmetrik 24 erfüllende Sequenz 22 die Objektliste 18 erstellt wird.

Das Erstellen der Objektliste 18 wird unter Verwendung eines zweiten Algorithmus des maschinellen Lernens A2 durchführt, welcher konfiguriert ist, die durch den zweiten Datensatz 16 umfassten Objekte an den gefilterten Positionen 14a und/oder Abschnitten 14b der geographischen Kartendaten 14 durch Objektdetektion zu bestimmen.

Objektlistendaten der jeweiligen Objektliste 18 liegen dabei in einem Koordinatensystem 1 des die Mehrzahl fahrzeugseitiger Umfelderkennungsensoren aufweisenden Kraftfahrzeugs.

Ferner wird ein virtueller Test zum Validieren der automatisierten Fahrfunktion des Kraftfahrzeugs unter Verwendung der durch ein erfindungsgemäßes Verfahren bestimmten, die Operational Design Domain 10 der automatisierten Fahrfunktion des Kraftfahrzeugs abdeckenden Szenarien durchgeführt.

Fig.2 zeigt eine schematische Darstellung eines Systems 1 zum Bestimmen von durch einen Datensatz von Umfelddaten eines Kraftfahrzeugs umfassten, eine Operational Design Domain 10 einer automatisierten Fahrfunktion des Kraftfahrzeugs abdeckenden Szenarien gemäß der bevorzugten Ausführungsform der Erfindung.

Das System 1 umfasst eine erste Datenbereitstellungseinheit 26, welche konfiguriert ist, einen ersten Datensatz 12a von die Operational Design Domain 10 der automatisierten Fahrfunktion des Kraftfahrzeugs abdeckenden, insbesondere synthetisch erzeugten, konkreten Szenarien 12a bereitzustellen.

Darüber hinaus umfasst das System 1 eine erste Berechnungseinheit 28, welche konfiguriert ist, für jedes konkrete Szenario 12a des ersten Datensatzes 12, Positionen 14a und/oder Abschnitte in geographischen Kartendaten 14 zu bestimmen, welche vorgegebene Anforderungen, insbesondere Parameter, des konkreten Szenarios 12a erfüllen.

Das System 1 umfasst ferner eine zweite Datenbereitstellungseinheit 30, welche konfiguriert ist, einen zweiten Datensatz 16 von Sensordaten einer durch eine Mehrzahl fahrzeugseitiger Umfelderkennungsensoren erfassten Fahrt des Kraftfahrzeugs bereitzustellen sowie eine zweite Berechnungseinheit 32, welche konfiguriert ist, den zweiten Datensatz 16 unter Verwendung der in den geographischen Kartendaten 14 bestimmten Positionen 14a und/oder Abschnitten 14b zu filtern.

Überdies umfasst das System 1 eine dritte Berechnungseinheit 34, welche konfiguriert ist, eine Objektliste 18 von durch den zweiten Datensatz 16 umfassten Objekten an den gefilterten Positionen 14a und/oder Abschnitten 14b der geographischen Kartendaten 14 zu erstellen, eine vierte Berechnungseinheit 36, welche konfiguriert ist, erste Trajektoriendaten für jedes durch den ersten Datensatz 12a umfasste konkrete Szenarios 12a und zweite Trajektoriendaten von durch die Objektliste 18 umfassten Trajektoriendaten zu vergleichen, und eine fünfte Berechnungseinheit 38, welche konfiguriert ist, durch den zweiten Datensatz 16 umfasste, die Operational Design Domain 10 der automatisierten Fahrfunktion des Kraftfahrzeugs abdeckenden Szenarien zu bestimmen.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken.

Beispielsweise kann eine Reihenfolge der Verfahrensschritte abgeändert werden. Die erfindungsgemäßen Verfahren können ferner zumindest abschnittsweise sequentiell oder parallel durchgeführt werden.

### Bezugszeichenliste

- 1: System
- 10: Operational Design Domain
- 12: erster Datensatz
- 12a: konkretes Szenario
- 14: geographische Kartendaten
- 14a: Positionen
- 14b: Abschnitte
- 16: zweiter Datensatz
- 18: Objektliste
- 19a: erster Merkmalsvektor
- 19b: zweiter Merkmalsvektor
- 20a: erste Trajektoriendaten
- 20b: zweite Trajektoriendaten
- 22: Sequenzen
- 24: Ähnlichkeitsmetrik
- 26: erste Datenbereitstellungseinheit
- 28: erste Berechnungseinheit
- 30: zweite Datenbereitstellungseinheit
- 32: zweite Berechnungseinheit
- 34: dritte Berechnungseinheit
- 36: vierte Berechnungseinheit
- 38: fünfte Berechnungseinheit
- A1: erster Algorithmus des maschinellen Lernens
- A2: zweiter Algorithmus des maschinellen Lernens
- S1-S7: Verfahrensschritte

## Patentansprüche

1. Computerimplementiertes Verfahren zum Bestimmen von durch einen Datensatz von Umfelddaten eines Kraftfahrzeugs umfassten, eine Operational Design Domain (10) einer automatisierten Fahrfunktion des Kraftfahrzeugs abdeckenden Szenarien, mit den Schritten:
Bereitstellen (S1) eines ersten Datensatzes (12) von die Operational Design Domain (10) der automatisierten Fahrfunktion des Kraftfahrzeugs abdeckenden, insbesondere synthetisch erzeugten, konkreten Szenarien (12a);
für jedes konkrete Szenario (12a) des ersten Datensatzes (12), Bestimmen (S2) von Positionen (14a) und/oder Abschnitten (14b) in geographischen Kartendaten (14), welche vorgegebene Anforderungen, insbesondere Parameter, des konkreten Szenarios (12a) erfüllen;
Bereitstellen (S3) eines zweiten Datensatzes (16) von Sensordaten einer durch eine Mehrzahl fahrzeugseitiger Umfelderkennungsensoren erfassten Fahrt des Kraftfahrzeugs;
Filtern (S4) des zweiten Datensatzes (16) unter Verwendung der in den geographischen Kartendaten (14) bestimmten Positionen (14a) und/oder Abschnitten (14b) ;
Erstellen (S5) einer Objektliste (18) von durch den zweiten Datensatz (16) umfassten Objekten an den gefilterten Positionen (14a) und/oder Abschnitten (14b) der geographischen Kartendaten (14);
Vergleichen (S6) erster Trajektoriendaten (20a) für jedes durch den ersten Datensatz (12a) umfasste konkrete Szenario (12a) und zweiter Trajektoriendaten (20b) von durch die Objektliste (18) umfassten Trajektoriendaten; und
basierend auf dem Vergleich, Bestimmen (S7) von durch den zweiten Datensatz (16) umfassten, die Operational Design Domain (10) der automatisierten Fahrfunktion des Kraftfahrzeugs abdeckenden Szenarien.

2. Computerimplementiertes Verfahren nach Anspruch 1, wobei ein die Operational Design Domain (10) der automatisierten Fahrfunktion des Kraftfahrzeugs abdeckendes Szenario bestimmt wird, falls die durch den ersten Datensatz (12a) umfassten ersten Trajektoriendaten (20a) zumindest ein vorgegebenes Ähnlichkeitsmaß zu den, durch die Objektliste (18) umfassten zweiten Trajektoriendaten (20b) aufweisen.

3. Computerimplementiertes Verfahren nach Anspruch 2, wobei die ersten Trajektoriendaten (20a) in einen ersten Merkmalsvektor (19a) transformiert werden und die zweiten Trajektoriendaten (20b) in einen zweiten Merkmalsvektor (19b) transformiert werden, wobei ein erster Algorithmus des maschinellen Lernens (A1) auf ein Trajektoriendatenpaar umfassend den ersten Merkmalsvektor (19a) eines jeweiligen durch den ersten Datensatz (12a) umfassten konkreten Szenarios (12a) und den zweiten Merkmalsvektor (19b) von durch die Objektliste (18) umfassten Trajektoriendaten angewendet wird.

4. Computerimplementiertes Verfahren nach Anspruch 3, wobei der erste Algorithmus des maschinellen Lernens (A1) basierend auf einem Vektorabstand zwischen dem ersten Merkmalsvektor (19a) und dem zweiten Merkmalsvektor (19b) bestimmt, insbesondere klassifiziert, ob die durch den zweiten Datensatz (16) umfassten zweiten Trajektoriendaten (20b) die Operational Design Domain (10) der automatisierten Fahrfunktion des Kraftfahrzeugs abdecken.

5. Computerimplementiertes Verfahren nach einem der vorhergehenden Ansprüche, wobei das Filtern (S4) des zweiten Datensatzes (16) unter Verwendung der in den geographischen Kartendaten (14) bestimmten Positionen (14a) und/oder Abschnitten (14b) ein Bestimmen von durch den zweiten Datensatz (16) umfassten geographischen Positionen (14a) und/oder Abschnitten (14b) umfasst, welche die vorgegebenen Anforderungen, insbesondere die vorgegebenen Parameter, des jeweiligen konkreten Szenarios (12a) erfüllen.

6. Computerimplementiertes Verfahren nach einem der vorhergehenden Ansprüche, wobei die vorgegebenen Anforderungen, insbesondere die vorgegebenen Parameter, des konkreten Szenarios (12a) eine Anzahl von Fahrspuren, eine Fahrspurbreite und/oder eine Fahrbahnkrümmung umfassen.

7. Computerimplementiertes Verfahren nach einem der vorhergehenden Ansprüche, wobei das Filtern (S4) des zweiten Datensatzes (16) unter Verwendung der in den geographischen Kartendaten (14) bestimmten Positionen (14a) und/oder Abschnitten (14b) mittels einer vorgegebenen Ähnlichkeitsmetrik (24) durchgeführt wird.

8. Computerimplementiertes Verfahren nach Anspruch 7, wobei der zweite Datensatz (16) unter Verwendung der in den geographischen Kartendaten (14) bestimmten Positionen (14a) und/oder Abschnitten (14b) nach Sequenzen (22) durchsucht wird, an welchen das Kraftfahrzeug, insbesondere ein Ego-Fahrzeug, auf die vorgegebene Ähnlichkeitsmetrik (24) erfüllenden Straßenabschnitten (14b) fuhr.

9. Computerimplementiertes Verfahren nach Anspruch 8, wobei für jede die vorgegebene Ähnlichkeitsmetrik (24) erfüllende Sequenz (22) die Objektliste (18) erstellt wird.

10. Computerimplementiertes Verfahren nach Anspruch 9, wobei das Erstellen der Objektliste (18) unter Verwendung eines zweiten Algorithmus des maschinellen Lernens (A2) durchführt wird, welcher konfiguriert ist, die durch den zweiten Datensatz (16) umfassten Objekte an den gefilterten Positionen (14a) und/oder Abschnitten (14b) der geographischen Kartendaten (14) durch Objektdetektion zu bestimmen.

11. Computerimplementiertes Verfahren nach einem der vorhergehenden Ansprüche, wobei Objektlistendaten der jeweiligen Objektliste (18) in einem Koordinatensystem (1) des die Mehrzahl fahrzeugseitiger Umfelderkennungsensoren aufweisenden Kraftfahrzeugs liegen.

12. Computerimplementiertes Verfahren zum Durchführen eines virtuellen Tests zum Validieren einer automatisierten Fahrfunktion eines Kraftfahrzeugs unter Verwendung der durch ein Verfahren nach einem der Ansprüche 1 bis 11 bestimmten, die Operational Design Domain (10) der automatisierten Fahrfunktion des Kraftfahrzeugs abdeckenden Szenarien.

13. System (1) zum Bestimmen von durch einen Datensatz von Umfelddaten eines Kraftfahrzeugs umfassten, eine Operational Design Domain (10) einer automatisierten Fahrfunktion des Kraftfahrzeugs abdeckenden Szenarien, umfassend:
eine erste Datenbereitstellungseinheit (26), welche konfiguriert ist, einen ersten Datensatz (12a) von die Operational Design Domain (10) der automatisierten Fahrfunktion des Kraftfahrzeugs abdeckenden, insbesondere synthetisch erzeugten, konkreten Szenarien (12a) bereitzustellen;
eine erste Berechnungseinheit (28), welche konfiguriert ist, für jedes konkrete Szenario (12a) des ersten Datensatzes (12), Positionen (14a) und/oder Abschnitte in geographischen Kartendaten (14) zu bestimmen, welche vorgegebene Anforderungen, insbesondere Parameter, des konkreten Szenarios (12a) erfüllen;
eine zweite Datenbereitstellungseinheit (30), welche konfiguriert ist, einen zweiten Datensatz (16) von Sensordaten einer durch eine Mehrzahl fahrzeugseitiger Umfelderkennungsensoren erfassten Fahrt des Kraftfahrzeugs bereitzustellen;
eine zweite Berechnungseinheit (32), welche konfiguriert ist, den zweiten Datensatz (16) unter Verwendung der in den geographischen Kartendaten (14) bestimmten Positionen (14a) und/oder Abschnitten (14b) zu filtern;
eine dritte Berechnungseinheit (34), welche konfiguriert ist, eine Objektliste (18) von durch den zweiten Datensatz (16) umfassten Objekten an den gefilterten Positionen (14a) und/oder Abschnitten (14b) der geographischen Kartendaten (14) zu erstellen;
eine vierte Berechnungseinheit (36), welche konfiguriert ist, erste Trajektoriendaten für jedes durch den ersten Datensatz (12a) umfasste konkrete Szenarios (12a) und zweite Trajektoriendaten von durch die Objektliste (18) umfassten Trajektoriendaten zu vergleichen; und
eine fünfte Berechnungseinheit (38), welche konfiguriert ist, durch den zweiten Datensatz (16) umfasste, die Operational Design Domain (10) der automatisierten Fahrfunktion des Kraftfahrzeugs abdeckenden Szenarien zu bestimmen.

14. Computerprogrammprodukt mit einem Computerprogramm, das Softwaremittel zur Durchführung eines der Verfahren nach einem der Ansprüche 1 bis 11 und 12 umfasst, wobei das Computerprogramm auf einem Computer ausgeführt wird.

15. Computerlesbarer Datenträger mit Programmcode eines Computerprogramms, um zumindest Teile eines der Verfahren nach einem der Ansprüche 1 bis 11 und 12 auszuführen, wenn das Computerprogramm auf einem Computer ausgeführt wird.
